# EUROPEAN PATENT APPLICATION

(11) **EP 4 626 116 A1**
(43) Date of publication of application: **01.10.2025**
(21) Application number: 24744110.8
(22) Date of filing: 08.01.2024
(51) Int. Cl.: H04W 72/23

(54) **NETWORK CONFIGURATION METHOD, AND COMMUNICATION APPARATUS AND RELATED DEVICE**

(30) Priority: 18.01.2023 CN 202310090957
(71) Applicant: Huawei Technologies Co., Ltd., Shenzhen, Guangdong 518129 (CN)
(72) Inventor: QIN, Huazhong, Shenzhen, Guangdong 518129 (CN); ZHANG, Liwen, Shenzhen, Guangdong 518129 (CN); YANG, Lunle, Shenzhen, Guangdong 518129 (CN)
(74) Representative: Maiwald GmbH
(86) International application number: PCT/CN2024/071087
(87) International publication number: WO 2024/152934

(57) **Abstract**

This application provides a network configuration method, a communication apparatus, and a related device. In the method, a network device determines a configuration manner of a plurality of supplementary uplink carriers used for uplink transmission, and processes the plurality of supplementary uplink carriers in the configuration manner. That the network device processes the plurality of supplementary uplink carriers in the configuration manner includes: skipping broadcasting information about the plurality of supplementary uplink carriers; or broadcasting information about the plurality of supplementary uplink carriers by using one piece of remaining minimum system information RMSI; or broadcasting information about any one of the plurality of supplementary uplink carriers by using one piece of remaining minimum system information RMSI. It can be learned that in this method, the plurality of SUL carriers may be configured, so that an SUL carrier capacity can be increased. In addition, the network device may not broadcast information about one or more SUL carriers or may broadcast information about one or more SUL carriers by using only one SSB or one piece of RMSI, so that system overheads are reduced, thereby improving uplink/downlink throughput.

## Description

This application claims priority to Chinese Patent Application No. 202310090957.9, filed with the China National Intellectual Property Administration on January 18, 2023 and entitled "NETWORK CONFIGURATION METHOD, COMMUNICATION APPARATUS, AND RELATED DEVICE", which is incorporated herein by reference in its entirety.

### TECHNICAL FIELD

This application relates to the field of communication technologies, and in particular, to a network configuration method, a communication apparatus, and a related device.

### BACKGROUND

As a requirement for uplink services gradually increases, a new radio (new radio, NR) network introduces a supplementary uplink (supplementary uplink, SUL) carrier technology to enhance an uplink transmission capability. An SUL needs to form a cell with a normal uplink (normal uplink, NUL) carrier. Therefore, a user camps on an NUL cell, and the SUL provides only uplink data transmission. Currently, if an SUL carrier is configured for the user, SUL carrier information needs to be first broadcast in a cell before the SUL carrier is configured. When a quantity of users is large, a large quantity of SUL carriers need to be broadcast. As a result, system overheads are increased, causing network performance (for example, throughput) degradation.

### SUMMARY

This application provides a network configuration method, a communication apparatus, and a related device. In the method, an SUL carrier capacity can be increased and system overheads can be reduced.

According to a first aspect, this application provides a network configuration method. The method may be performed by a network device, or may be performed by a component (for example, a processor, a chip, or a chip system) of a network device, or may be performed by a logic module or software that can implement all or some of functions of a network device. For example, the network device may be a base station. The network device determines a configuration manner of a plurality of supplementary uplink carriers used for uplink transmission, and processes the plurality of supplementary uplink carriers in the configuration manner. That the network device processes the plurality of supplementary uplink carriers in the configuration manner includes: skipping broadcasting information about the plurality of supplementary uplink carriers; or broadcasting information about the plurality of supplementary uplink carriers by using one piece of remaining minimum system information RMSI; or broadcasting information about any one of the plurality of supplementary uplink carriers by using one piece of remaining minimum system information RMSI.

In this method, the network device may configure the plurality of SUL carriers, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Alternatively, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput.

In a possible implementation, the information about the plurality of supplementary uplink carriers is carried in a supplementary uplink carrier configuration information element. The configuration manner includes: the supplementary uplink carrier configuration information element is not broadcast in remaining minimum system information; or the supplementary uplink carrier configuration information element is not configured; or each of the plurality of supplementary uplink carriers is not configured with one or more of a corresponding physical uplink shared channel PUSCH, physical uplink control channel PUCCH, physical random access channel PRACH, and sounding reference signal SRS.

In the method, when the network device does not broadcast the information about the plurality of SUL carriers, the network device may specifically configure, in any one of the foregoing three manners, the SUL configuration information element in which information about the SUL carrier is carried, so that the plurality of SUL carriers are configured when NUL carrier performance is almost not affected, thereby increasing an SUL carrier capacity.

In a possible implementation, the configuration manner includes: one supplementary uplink carrier configuration information element carries information about a plurality of supplementary uplink carriers.

In the method, when the network device broadcasts information about one or more SUL carriers by using one SSB or one piece of RMSI, the network device may configure one SUL configuration information element to carry information about all SUL carriers. For example, the network device extends a byte of the SUL configuration information element, so that one SUL configuration information element can carry the information about the plurality of SUL carriers, thereby avoiding configuring a plurality of information elements to carry the information about the plurality of SUL carriers. This manner is different from a current manner in which the information about the plurality of SUL carriers is broadcast by using a plurality of SSBs or a plurality of pieces of RMSI in that system overheads can be greatly reduced.

In a possible implementation, the network device obtains capability information of a terminal device, where the capability information includes a supplementary uplink carrier set supported by the terminal device. The network device determines a first supplementary uplink carrier based on the supplementary uplink carrier set supported by the terminal device and the plurality of supplementary uplink carriers, and sends information about the first supplementary uplink carrier to the terminal device. The information about the first supplementary uplink carrier is used by the terminal device to configure the supplementary uplink carrier to perform uplink transmission.

In the method, the network device may further obtain the capability information of the terminal device, to determine an SUL capability of the terminal device. When the terminal device supports the SUL capability, an intersection set of the SUL set supported by the terminal device and the SUL capability supported by the network device is obtained, to select an optimal SUL carrier and configure the optimal SUL carrier, thereby improving uplink throughput.

In a possible implementation, the network device determines an intersection set of the supplementary uplink carrier set supported by the terminal device and the plurality of supplementary uplink carriers, and determines that the first supplementary uplink carrier is a supplementary uplink carrier that meets a first condition in the intersection set. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

In the method, the network device may determine the optimal SUL carrier based on parameters such as coverage, a load, an available bandwidth, and spectral efficiency, thereby improving uplink throughput.

In a possible implementation, any broadcast supplementary uplink carrier is the same as the first supplementary uplink carrier.

In the method, an SUL carrier broadcast by the network device by using one SSB may be the optimal SUL carrier, so that the terminal device initiates random access on the optimal SUL carrier, thereby improving uplink throughput.

According to a second aspect, this application provides a network configuration method. The method may be performed by a terminal device, or may be performed by a component (for example, a processor, a chip, or a chip system) of a terminal device, or may be performed by a logic module or software that can implement all or some of functions of a terminal device. The terminal device receives information that is about a plurality of supplementary uplink carriers and that is broadcast by a network device by using one piece of remaining minimum system information RMSI; or receives information that is about any one of a plurality of supplementary uplink carriers and that is broadcast by a network device by using one piece of remaining minimum system information RMSI. The terminal device initiates random access on a broadcast supplementary uplink carrier.

In the method, the terminal device may receive information that is about one or more SUL carriers and that is broadcast by the network device on one SSB or one piece of RMSI, so that random access can be initiated on the broadcast SUL carrier, thereby increasing an SUL carrier capacity to improve uplink/downlink throughput.

In a possible implementation, the terminal device sends capability information of the terminal device to the network device, where the capability information includes a supplementary uplink carrier set supported by the terminal device. The terminal device receives information about a first supplementary uplink carrier from the network device, and configures a supplementary uplink carrier based on the information about the first supplementary uplink carrier, where the supplementary uplink carrier is used by the terminal device to perform uplink transmission.

In the method, the terminal device may send the capability information of the terminal device to the network device, so that the network device determines an SUL capability of the terminal device. In this way, the terminal device can configure an optimal SUL carrier, thereby improving uplink throughput.

In a possible implementation, the first supplementary uplink carrier is a supplementary uplink carrier that meets a first condition in an intersection set of the supplementary uplink carrier set supported by the terminal device and the plurality of broadcast supplementary uplink carriers. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

In a possible implementation, any broadcast supplementary uplink carrier is the same as the first supplementary uplink carrier.

In the method, a broadcast SUL carrier received by the terminal device may be the optimal SUL carrier, so that the terminal device initiates random access on the optimal SUL carrier, thereby improving uplink throughput.

According to a third aspect, this application provides a network configuration method. The method may be performed by a network device, or may be performed by a component (for example, a processor, a chip, or a chip system) of a network device, or may be performed by a logic module or software that can implement all or some of functions of a network device. For example, the network device may be a base station. The network device obtains capability information of a terminal device, where the capability information includes a supplementary uplink carrier set supported by the terminal device. The network device determines a first supplementary uplink carrier based on the supplementary uplink carrier set supported by the terminal device and a plurality of supplementary uplink carriers supported by the network device, and sends information about the first supplementary uplink carrier to the terminal device. The first supplementary uplink carrier is used by the terminal device to configure the supplementary uplink carrier to perform uplink data transmission.

In the method, the network device may obtain capability information of the terminal device, to determine an SUL capability of the terminal device. When the terminal device supports the SUL capability, an intersection set of the SUL set supported by the terminal device and the SUL capability supported by the network device is obtained, to select an optimal SUL carrier and configure the optimal SUL carrier, thereby improving uplink throughput.

In a possible implementation, the network device receives, from the terminal device, the supplementary uplink carrier set supported by the terminal device, or obtains, by using a terminal device capability query information element, the supplementary uplink carrier set supported by the terminal device.

In the method, the network device may receive all capabilities of the terminal device reported by the terminal device, to determine the SUL capability of the terminal device; or the network device may trigger capability query (for example, query by using a capability query information element UECapabilityEnquiry), to obtain the SUL capability of the terminal device, so that the network device can select the optimal SUL carrier and configure the optimal SUL carrier, thereby improving uplink throughput.

In a possible implementation, the network device determines an intersection set of the supplementary uplink carrier set supported by the terminal device and the plurality of supplementary uplink carriers supported by the network device, and determines that the first supplementary uplink carrier is a supplementary uplink carrier that meets a first condition in the intersection set. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

In the method, the network device may determine the optimal SUL carrier based on parameters such as coverage, a load, an available bandwidth, and spectral efficiency, thereby improving uplink throughput.

In a possible implementation, before the network device determines the first uplink carrier, the network device determines a configuration manner of the plurality of supplementary uplink carriers used for uplink transmission, and processes the plurality of supplementary uplink carriers in the configuration manner. That the network device processes the plurality of supplementary uplink carriers in the configuration manner includes: skipping broadcasting information about the plurality of supplementary uplink carriers; or broadcasting information about the plurality of supplementary uplink carriers by using one piece of remaining minimum system information RMSI; or broadcasting information about any one of the plurality of supplementary uplink carriers by using one piece of remaining minimum system information RMSI.

In this method, the network device may configure the plurality of SUL carriers, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Alternatively, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput.

In a possible implementation, the information about the plurality of supplementary uplink carriers is carried in a supplementary uplink carrier configuration information element. The configuration manner includes: the supplementary uplink carrier configuration information element is not broadcast in remaining minimum system information; or the supplementary uplink carrier configuration information element is not configured; or each of the plurality of supplementary uplink carriers is not configured with one or more of a corresponding physical uplink shared channel PUSCH, physical uplink control channel PUCCH, physical random access channel PRACH, and sounding reference signal SRS.

In the method, when the network device does not broadcast the information about the plurality of SUL carriers, the network device may specifically configure, in any one of the foregoing three manners, the SUL configuration information element in which information about the SUL carrier is carried, so that the plurality of SUL carriers are configured when NUL carrier performance is almost not affected, thereby increasing an SUL carrier capacity.

In a possible implementation, the configuration manner includes: one supplementary uplink carrier configuration information element carries information about a plurality of supplementary uplink carriers.

In the method, when the network device broadcasts information about one or more SUL carriers by using one SSB, the network device may configure one SUL configuration information element to carry information about all SUL carriers. For example, the network device extends a byte of the SUL configuration information element, so that one SUL configuration information element can carry the information about the plurality of SUL carriers, thereby avoiding configuring a plurality of information elements to carry the information about the plurality of SUL carriers. This greatly reduces system overheads.

In a possible implementation, any broadcast supplementary uplink carrier is the same as the first supplementary uplink carrier.

In the method, an SUL carrier broadcast by the network device by using one SSB may be the optimal SUL carrier, so that the terminal device initiates random access on the optimal SUL carrier, thereby improving uplink throughput.

According to a fourth aspect, this application provides a network configuration method. The method may be performed by a terminal device, or may be performed by a component (for example, a processor, a chip, or a chip system) of a terminal device, or may be performed by a logic module or software that can implement all or some of functions of a terminal device. The terminal device sends capability information of the terminal device to the network device, where the capability information includes a supplementary uplink carrier set supported by the terminal device. The terminal device receives information about a first supplementary uplink carrier from the network device, and configures a supplementary uplink carrier based on the information about the first supplementary uplink carrier, where the supplementary uplink carrier is used by the terminal device to perform uplink data transmission.

In the method, the terminal device may send the capability information of the terminal device to the network device, so that the network device determines an SUL capability of the terminal device. In this way, the terminal device can configure an optimal SUL carrier, thereby improving uplink throughput.

In a possible implementation, the first supplementary uplink carrier is a supplementary uplink carrier that meets a first condition in an intersection set of the supplementary uplink carrier set supported by the terminal device and the plurality of supplementary uplink carriers supported by the network device. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

In a possible implementation, before the terminal device receives the information about the first supplementary uplink carrier from the network device, the terminal device receives information that is about the plurality of supplementary uplink carriers and that is broadcast by the network device by using one piece of remaining minimum system information RMSI; or receives information that is about any one of the plurality of supplementary uplink carriers and that is broadcast by the network device by using one piece of remaining minimum system information RMSI. The terminal device initiates random access on a broadcast supplementary uplink carrier.

In the method, the terminal device may receive information that is about one or more SUL carriers and that is broadcast by the network device on one SSB, so that random access can be initiated on the broadcast SUL carrier, thereby increasing an SUL carrier capacity to improve uplink/downlink throughput.

In a possible implementation, any broadcast supplementary uplink carrier is the same as the first supplementary uplink carrier.

In the method, a broadcast SUL carrier received by the terminal device may be the optimal SUL carrier, so that the terminal device initiates random access on the optimal SUL carrier, thereby improving uplink throughput.

According to a fifth aspect, this application provides a communication apparatus. The communication apparatus may be a network device, an apparatus in a network device, or an apparatus that can be used in a matching manner with a network device. In a possible implementation, the communication apparatus may include modules that perform the methods/operations/steps/actions described in the first aspect, the third aspect, and any one of the possible implementations of the first aspect and the third aspect in a one-to-one correspondence. The module may be a hardware circuit, or may be software, or may be implemented by a combination of a hardware circuit and software. In a possible implementation, the communication apparatus may include a processing unit and a communication unit.

It may be understood that the communication apparatus may also implement effect that can be implemented in the first aspect, the third aspect, and any one of the possible implementations of the first aspect and the third aspect.

According to a sixth aspect, this application provides another communication apparatus. The communication apparatus may be a terminal device, an apparatus in a terminal device, or an apparatus that can be used in a matching manner with a terminal device. In a possible implementation, the communication apparatus may include modules that perform the methods/operations/steps/actions described in the second aspect, the fourth aspect, and any one of the possible implementations of the second aspect and the fourth aspect in a one-to-one correspondence. The module may be a hardware circuit, or may be software, or may be implemented by a combination of a hardware circuit and software. In a possible implementation, the communication apparatus may include a processing unit and a communication unit.

It may be understood that the communication apparatus may also implement effect that can be implemented in the second aspect, the fourth aspect, and any one of the possible implementations of the second aspect and the fourth aspect.

According to a seventh aspect, this application provides a network device that includes a processor and a memory, where the memory is configured to store instructions, and when the instructions are executed by the processor, the network device is enabled to implement the method in any one of the first aspect, the third aspect, or the possible implementations of the first aspect and the third aspect. Optionally, the processor is coupled to the memory.

According to an eighth aspect, this application provides a terminal device that includes a processor and a memory, where the memory is configured to store instructions, and when the instructions are executed by the processor, the terminal device is enabled to implement the method in any one of the second aspect, the fourth aspect, or the possible implementations of the second aspect and the fourth aspect. Optionally, the processor is coupled to the memory.

According to a ninth aspect, this application provides a communication system. The communication system includes a plurality of apparatuses or devices according to the fifth aspect to the eighth aspect, so that the apparatuses or devices perform the method in any one of the first aspect to the fourth aspect or the possible implementations of the first aspect to the fourth aspect.

According to a tenth aspect, this application provides a computer-readable storage medium. The computer-readable storage medium stores instructions, and when the instructions are run on a computer, the computer is enabled to perform the method in any one of the first aspect to the fourth aspect or the possible implementations of the first aspect to the fourth aspect.

According to an eleventh aspect, this application provides a chip system. The chip system includes a processor and an interface, and may further include a memory, configured to implement the method in any one of the first aspect to the fourth aspect or the possible implementations of the first aspect to the fourth aspect. The chip system may include a chip, or may include a chip and another discrete component.

According to a twelfth aspect, this application further provides a computer program product that includes instructions. When the instructions are run on a computer, the computer is enabled to perform the method in any one of the first aspect to the fourth aspect or the possible implementations of the first aspect to the fourth aspect.

### BRIEF DESCRIPTION OF DRAWINGS

FIG. 1 is a diagram of a communication system according to this application;
FIG. 2 is a schematic flowchart of a network configuration method according to this application;
FIG. 3 is a schematic flowchart of another network configuration method according to this application;
FIG. 4 is a schematic flowchart of still another network configuration method according to this application;
FIG. 5 is a diagram of an apparatus according to this application; and
FIG. 6 is a diagram of a device according to this application.

### DESCRIPTION OF EMBODIMENTS

In embodiments of this application, "/" may represent an "or" relationship between associated objects, for example, A/B may represent A or B; and "and/or" may represent that there are three relationships between associated objects, for example, A and/or B may represent the following three cases: Only A exists, both A and B exist, and only B exists, where A and B may be singular or plural. To facilitate description of the technical solutions in embodiments of this application, in embodiments of this application, terms such as "first" and "second" may be used to distinguish between technical features with same or similar functions. The words such as "first" and "second" do not limit a quantity and an execution sequence, and the words such as "first" and "second" do not limit a definite difference. In embodiments of this application, the word such as "example" or "for example" represents an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding.

The following describes technical solutions in embodiments of this application with reference to the accompanying drawings in embodiments of this application.

To resolve a problem that when there are a large quantity of users, there are also a large quantity of supplementary uplink (supplementary uplink, SUL) carriers that need to be broadcast. As a result, system overheads are increased, causing a problem of network performance (for example, throughput) degradation. In view of this, this application provides a network configuration method, to increase an SUL carrier capacity when system overheads are almost not increased.

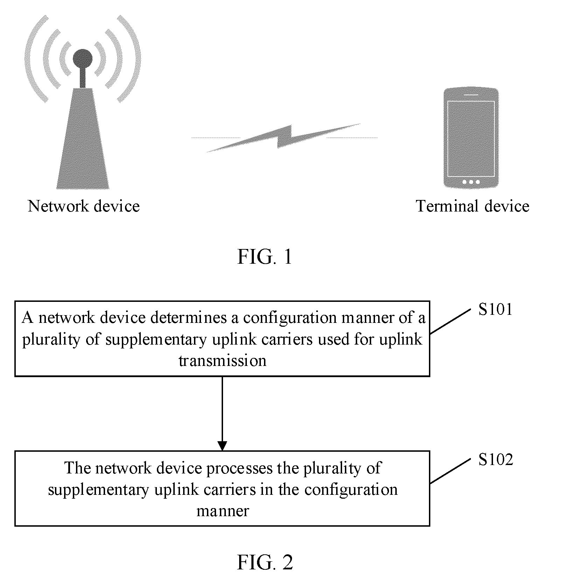

The network configuration method provided in this application may be applied to a communication system shown in FIG. 1. For example, the communication system includes a network device and a terminal device. Specifically, the terminal device may be user equipment (user equipment, UE), a terminal, a mobile phone, an internet of things terminal device (for example, an in-vehicle device or a wearable device), a terminal device in a 5G network, a terminal device in a future evolved PLMN network, a terminal device in a next generation network (for example, 6G), or the like. The network device may be a device that can communicate with the terminal device. The network device may be a base station (base station, BS), a relay station, or an access point (access point, AP). The base station may be an evolutional NodeB (eNB or eNodeB for short) in a long term evolution (long term evolution, LTE) system, or may be a gNodeB in a new radio (new radio, NR) network, or may be a radio device in a next generation radio access network (NG (next generation) RAN), or may be a radio controller in a cloud radio access network (cloud radio access network, CRAN) scenario, or may be an AP in a wireless fidelity (wireless fidelity, Wi-Fi) network, a BS in a worldwide interoperability for microwave access (worldwide interoperability for microwave access, WiMAX) network, or the like.
I. For ease of understanding, the following describes in detail definitions of related terms in this application.
   1. According to a stipulation in an existing protocol, before an SUL carrier is configured, information about the SUL carrier needs to be first broadcast in a cell.

For example, according to a stipulation in an existing protocol (for example, TS 38.331), before configuring an SUL carrier, a base station needs to first broadcast information about the SUL carrier in a cell. The broadcast information about the SUL carrier mainly includes information that is of the SUL carrier and that is used for access (for example, the terminal device may initiate random access by using the SUL carrier), for example, includes information such as a bandwidth and a frequency band of the SUL carrier. If the information about the SUL carrier is broadcast in the cell, for example, the information about the SUL carrier may be added to a remaining minimum system information (remaining minimum system information, RMSI) message. In other words, content of the RMSI message is increased. As a result, resource overheads of a physical downlink control channel (physical downlink control channel, PDCCH) and a physical downlink shared channel (physical downlink shared channel, PDSCH) are increased. Alternatively, if the information about the SUL carrier is broadcast in the cell, multiple synchronization signal and physical broadcast channel blocks (multiple synchronization signal and PBCH (physical broadcast channel) blocks, multiple SSBs) may be used, and each SSB broadcasts information about one SUL carrier. In this manner, system overheads are also increased.

Optionally, if the base station side chooses not to support the UE in initiating a random access procedure on the SUL carrier, additional overheads of broadcasting the information about the SUL carrier in the cell are unnecessary.

### 2. The base station queries a capability of the UE.

### Currently, the base station may query capability information of the terminal device. For example, the UE may report all capabilities of the UE, or report only some capabilities of the UE. In this application, the capability of the terminal device is specifically a combination of all SUL carriers supported by the terminal device. For example, it is assumed that the UE supports any SUL carrier in an SUL carrier set {SUL_1, SUL_2, ..., SUL_n}. In this case, it indicates that the UE has a capability of supporting the SUL carrier, and the capability information of the UE includes an SUL carrier set supported by the UE. Optionally, the capability information of the UE may further include information about each SUL carrier in the SUL carrier set supported by the UE, for example, information such as a bandwidth and a frequency band of the SUL carrier.

### II. Network configuration method provided in this application

Example 1: FIG. 2 is a schematic flowchart of a network configuration method according to this application. The network configuration method is applied to the communication system shown in FIG. 1. For example, the network configuration method may be performed by a network device, and includes the following steps.

S101: The network device determines a configuration manner of a plurality of supplementary uplink carriers used for uplink transmission.

The network device may support the plurality of SUL carriers, which may also be referred to as that the network device supports a multi-frequency SUL carrier. The plurality of SUL carriers may have inconsistent frequencies, inconsistent available bandwidths, or inconsistent frequency bands. This is not limited in this application. For example, the network device supports the plurality of SUL carriers, and the plurality of supported SUL carriers may form an SUL carrier set supported by the network device. The SUL carrier set may be represented as {SUL_1, SUL_2, ..., SUL_n}, where n indicates a quantity of SUL carriers, and N is a positive integer.

When the network device supports the plurality of SUL carriers, the network device may determine the configuration manner of the plurality of SUL carriers. The network device may configure an SUL carrier configuration (supplementaryUplinkConfig) information element, and the SUL carrier configuration information element is used to carry information about the plurality of SUL carriers. The network device modifies a configuration of the SUL carrier configuration information element, to implement different configuration manners. The information about the SUL carrier may include but is not limited to information such as frequency information, available bandwidth information, frequency band information, and load information of the SUL carrier. This is not limited in this application.

Specifically, the configuration manner may include but is not limited to the following several manners.

Configuration manner 1: The supplementary uplink carrier configuration information element is not broadcast in remaining minimum system information.

For example, the supplementaryUplinkConfig information element is not broadcast in the RMSI.

Optionally, for example, the configuration manner 1 may also mean that the supplementary uplink carrier configuration information element is not configured. For example, the following constraint is removed from supplementaryUplinkConfig configuration descriptions in the message 331: The network device can configure the information about the supplementary uplink carrier only when supplementaryUplinkConfig is configured in ServingCellConfigCommon or supplementary Uplink is configured in ServingCellConfigCommonSIB.

Optionally, that the supplementary uplink carrier configuration information element is not configured may mean, for example, that each of the plurality of supplementary uplink carriers is not configured with one or more of a corresponding physical uplink shared channel (physical uplink shared channel, PUSCH), physical uplink control channel (physical uplink control channel, PUCCH), physical random access channel (physical random access channel, PRACH), and sounding reference signal (sounding reference signal, SRS). For example, each of the plurality of SUL carriers is configured with none of a corresponding PUSCH/PUCCH/PRACH/SRS, so that the plurality of SUL carriers do not occupy PUSCH/PUCCH/PRACH/SRS resources. Alternatively, each of the plurality of SUL carriers is not configured with one or more of a PUSCH/PUCCH/PRACH/SRS.

Configuration manner 2: One supplementary uplink carrier configuration information element carries information about a plurality of supplementary uplink carriers.

For example, the network device does not add an SSB or RMSI (a common part is not added), and newly adds configuration information for SUL carrier broadcasting in a one-to-many manner. It is assumed that supplementaryUplinkConfig originally occupies A bytes, and B bytes are added to carry the configuration information for SUL carrier broadcasting in a one-to-many manner, which is different from a manner in which an SSB or RMSI (at least A bytes are newly added, where both A and B are positive integers, and a value of A is far greater than a value of B) is newly added in that overheads can be effectively reduced, so that one SUL carrier configuration information element carries the information about the plurality of supplementary uplink carriers.

S102: The network device processes the plurality of supplementary uplink carriers in the configuration manner.

Specifically, a manner in which the network device processes the plurality of supplementary uplink carriers in the configuration manner described in S101 includes but is not limited to the following manners:

Processing manner 1: The network device does not broadcast the information about the plurality of supplementary uplink carriers.

For example, in correspondence to the configuration manner 1 in S101, the network device does not configure supplementaryUplinkConfig or each of the plurality of SUL carriers is not configured with one or more of the corresponding PUSCH/PUCCH/PRACH/SRS. In this case, the network device does not broadcast supplementaryUplinkConfig, that is, does not broadcast the information about the plurality of supplementary uplink carriers.

Processing manner 2: The network device broadcasts the information about the plurality of supplementary uplink carriers by using one piece of RMSI.

For example, in correspondence to the configuration manner 2 in S101, one supplementary uplink carrier configuration information element carries information about a plurality of supplementary uplink carriers. In this case, the network device may broadcast, by using only one SSB or one piece of RMSI, the information about the plurality of configured SUL carriers in the SUL carrier configuration information element. It is assumed that when the network device broadcasts the information about the plurality of SUL carriers in an existing processing manner, system overheads are N*(SSB+RMSI+CORESET0+other overheads), where N represents a quantity of SUL carriers supported by the network device, SSB+RMSI+CORESET0 represents system overheads for broadcasting information about one SUL carrier, and other overheads may be, for example, overheads of other system information (other system information, OSI). This is not limited in this application. In the processing manner 2, only one piece of SUL carrier information needs to be broadcast, and system overheads are reduced to (SSB+RMSI+CORESET0+other overheads). In other words, when the network device broadcasts the information about the plurality of SUL carriers in the processing manner 2, the system overheads are basically the same as those of a case in which the SUL carrier is not broadcast.

Processing manner 3: The network device broadcasts information about any one of the plurality of supplementary uplink carriers by using one piece of RMSI.

For example, in correspondence to the configuration manner 2 in S101, one supplementary uplink carrier configuration information element carries information about a plurality of supplementary uplink carriers. In this case, the network device may broadcast, by using only one SSB or one piece of RMSI, information about any one of the plurality of configured SUL carriers in the SUL carrier configuration information element. Based on system overheads analysis in the processing manner 2, in the processing manner 3, only one piece of SUL carrier information needs to be broadcast, and system overheads are reduced to (SSB+RMSI+CORESET0+other overheads). In other words, when the network device broadcasts the information about the one SUL carrier in the processing manner 3, the system overheads can be greatly reduced compared with those of a current manner in which information about a plurality of SUL carriers is broadcast by using a plurality of SSBs or a plurality of pieces of RMSI.

In Example 1, the network device may configure the plurality of SUL carriers, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Alternatively, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput.

The following describes in detail, by using two specific examples, the configuration manners and the processing manners described in Example 1, and another interaction procedure between the network device and the terminal device.

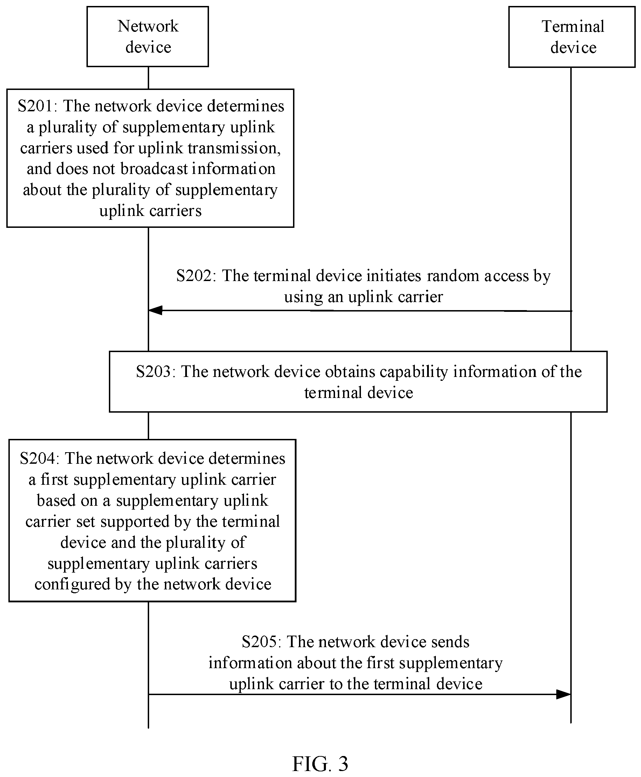

Example 2: FIG. 3 is a schematic flowchart of another network configuration method according to this application. The network configuration method is applied to the communication system shown in FIG. 1. For example, the network configuration method may be implemented through interaction between the network device and the terminal device, and includes the following steps.

S201: The network device determines a plurality of supplementary uplink carriers used for uplink transmission, and does not broadcast information about the plurality of supplementary uplink carriers.

In Example 2, the network device does not broadcast the information about the plurality of SUL carriers. In other words, the network device adopts the configuration manner 1 and the processing manner 1 described in S101 and does not broadcast information about the SUL carrier. For a specific implementation, refer to corresponding descriptions in S101. Details are not described herein again.

S202: The terminal device initiates random access by using an uplink carrier.

For example, when the network device does not broadcast the information about the SUL carrier, the terminal device can initiate random access only on an NUL carrier. For a procedure in which the terminal device initiates random access on the NUL carrier, refer to corresponding descriptions in an existing protocol standard. Details are not described herein again.

S203: The network device obtains capability information of the terminal device, where the capability information includes a supplementary uplink carrier set supported by the terminal device.

When the terminal device accesses the network device by using a random access procedure, the network device may obtain the capability information of the terminal device. For descriptions of the capability information of the terminal device, refer to corresponding descriptions in the first part, section 2. For example, it is assumed that UE supports any SUL carrier in an SUL carrier set {SUL_1, SUL_2, ..., SUL_n}. In this case, it indicates that the UE has a capability of supporting the SUL carrier (an SUL capability of the UE), and capability information of the UE includes the SUL carrier set supported by the UE.

Specifically, a manner in which the network device obtains the capability information of the terminal device includes but is not limited to the following obtaining manners.

Obtaining manner 1: The network device receives, from the terminal device, the supplementary uplink carrier set supported by the terminal device.

For example, the network device may receive all capabilities of the terminal device reported by the terminal device, and determine, by using a BandCombinationList capability, a combination of all SUL frequency bands supported by the UE. If the UE supports any SUL in {SUL_1, SUL_2, ..., SUL_n}, the UE has the SUL capability.

Obtaining manner 2: The network device obtains, by using a terminal device capability query (UECapabilityEnquiry) information element, the supplementary uplink carrier set supported by the terminal device.

For example, the network device may trigger a capability query, and obtain all SUL capability information of the terminal device by using the capability query information element UECapabilityEnquiry. If the UE supports any SUL in {SUL_1, SUL_2, ..., SUL_n}, the UE has the SUL capability.

It should be noted that in Example 2, because the network device does not broadcast the information about the SUL carrier, the terminal device cannot learn of information about one or more SUL carriers in advance. In this case, the terminal device chooses to report all SUL capability information, or the network device obtains all SUL capability information of the terminal device through querying by using UECapabilityEnquiry.

S204: The network device determines a first supplementary uplink carrier based on the supplementary uplink carrier set supported by the terminal device and the plurality of supplementary uplink carriers configured by the network device.

The SUL carrier set supported by the terminal device is the SUL carrier set determined in S203, and the plurality of SUL carriers configured by the network device is the plurality of SUL carriers configured in S201.

Specifically, the following procedure is included when S204 is performed.
(1) The network device determines an intersection set of the supplementary uplink carrier set supported by the terminal device and the plurality of supplementary uplink carriers configured by the network device.

For example, it is assumed that the SUL set supported by the terminal device is { SUL_1, SUL_2, SUL_3, SUL_4, SUL_5}, and the plurality of supplementary uplink carriers configured by the network device are { SUL_1, SUL_3, SUL_4, SUL_5, SUL_6, SUL_7}. In this case, the intersection set is {SUL_1, SUL_3, SUL_4, SUL_5}. Optionally, the intersection set may also be referred to as an SUL carrier candidate set.

(2) The network device determines that the first supplementary uplink carrier is a supplementary uplink carrier that meets a first condition in the intersection set. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency. In this application, the first supplementary uplink carrier is also referred to as a first SUL carrier or an optimal SUL carrier, and the first supplementary uplink, the first SUL carrier, and the optimal SUL carrier have a same meaning. The network device may determine the optimal SUL carrier based on a selection algorithm.

For example, the network device may determine the first SUL carrier based on the selection algorithm. Parameters considered in the selection algorithm may include but are not limited to coverage of the SUL carrier, a load of the SUL carrier, an available bandwidth of the SUL carrier, spectral efficiency of the SUL carrier, throughput of the SUL carrier, and the like.

The coverage of the SUL carrier means existence of SUL carrier coverage in a location area in which the terminal device is located, and an SUL carrier without coverage is not considered. For example, the network device selects, from the SUL carrier candidate set, an SUL carrier with strongest coverage in the location area in which the terminal device is located as the first SUL carrier. Coverage strength of the SUL carrier may be determined based on an SUL frequency band, and a low frequency is preferred (that is, an SUL carrier in a low frequency band has stronger coverage).

The load of the SUL carrier is an amount of data that is already carried on the SUL carrier. For example, the network device selects, from the SUL carrier candidate set, an SUL carrier with a lowest load as the first SUL carrier. In other words, a larger amount of data that may be further carried by the SUL carrier indicates a higher selection priority.

The available bandwidth of the SUL carrier is an amount of data that may be further carried by the SUL carrier. For example, the network device selects, from the SUL carrier candidate set, an SUL carrier with a largest available bandwidth as the first SUL carrier. In other words, a larger amount of data that may be further carried by the SUL carrier indicates a higher selection priority.

The spectral efficiency of the SUL carrier is related to a code rate and a coding scheme. For example, the network device selects, from the SUL carrier candidate set, an SUL carrier with highest spectral efficiency as the first SUL carrier. In other words, higher spectral efficiency of the SUL carrier indicates a higher selection priority.

The throughput of the SUL carrier is determined based on a current load, a code rate, a modulation scheme, and the like of the SUL carrier, and is equivalent to throughput that can be obtained by the terminal device after the SUL carrier is configured. For example, the network device selects, from the SUL carrier candidate set, an SUL carrier with highest throughput as the first SUL carrier. In other words, higher throughput of the SUL carrier indicates a higher selection priority.

Optionally, when the foregoing information changes, the optimal SUL carrier may change. When selecting the optimal SUL carrier from the SUL carrier candidate set, the network device may consider a combination of some or all of the foregoing factors.

Optionally, when the terminal device is already configured with downlink carrier aggregation (downlink carrier aggregation, DL CA) for a downlink, the network device may select an SUL carrier with strongest coverage from a corresponding SUL frequency band combination in a primary component carrier (primary component carrier, PCC) as the first SUL carrier. The PCC is a component carrier corresponding to a primary cell (primary cell, PCell), and the PCell is a cell in which the UE performs initial connection establishment, or a cell in which the UE performs radio resource control (radio resource control, RRC) connection reestablishment, or a primary cell specified in a handover (handover) process. The PCell is responsible for RRC communication with the UE. A downlink carrier of the PCell is referred to as a DL PCC, and an uplink carrier of the PCell is referred to as a UL PCC.

Optionally, when the terminal device is already configured with DL CA for a downlink, the network device may select an SUL carrier with a largest available bandwidth from a corresponding SUL frequency band combination in the PCC as the first SUL carrier. Optionally, when the terminal device is already configured with DL CA for a downlink, the network device may select an SUL carrier with a lowest load from a corresponding SUL frequency band combination in the PCC as the first SUL carrier. Optionally, when the terminal device is already configured with DL CA for a downlink, the network device may select an SUL carrier with highest spectral efficiency from a corresponding SUL frequency band combination in the PCC as the first SUL carrier.

Optionally, when an NUL and another carrier are aggregated, for example, when the terminal device is already configured with UL CA for an uplink, the network device may select an SUL carrier with strongest coverage from a corresponding SUL frequency band combination in the PCC as the first SUL carrier. Optionally, when the terminal device is already configured with DL CA for an uplink, the network device may select an SUL carrier with a largest available bandwidth from a corresponding SUL frequency band combination in the PCC as the first SUL carrier. Optionally, when the terminal device is already configured with DL CA for an uplink, the network device may select an SUL carrier with a lowest load from a corresponding SUL frequency band combination in the PCC as the first SUL carrier. Optionally, when the terminal device is already configured with DL CA for an uplink, the network device may select an SUL carrier with highest spectral efficiency from a corresponding SUL frequency band combination in the PCC as the first SUL carrier.

Optionally, when the terminal device is already configured with DL CA for a downlink, the network device may select an optimal SUL carrier from a corresponding SUL frequency band combination in a secondary component carrier (secondary component carrier, SCC). The SCC is a component carrier corresponding to a secondary cell (secondary cell, SCell). A downlink carrier of the SCell is referred to as a DL SCC, and an uplink carrier of the SCell is referred to as a UL SCC. When the network device selects an optimal SUL carrier from a corresponding SUL frequency band combination in the SCC, for a specific implementation, refer to corresponding descriptions in the PCC. For example, the network device selects an SUL carrier with a lowest load from the corresponding SUL frequency band combination in the SCC as the optimal SUL carrier. Details are not described herein again.

In conclusion, when the terminal device is already configured with DL CA for an uplink or the terminal device is already configured with DL CA for a downlink, the network device may select an optimal SUL carrier from a corresponding SUL frequency band combination in the PCC, or select an optimal SUL carrier from a corresponding SUL frequency band combination in the SCC. Some or all of the foregoing factors may be considered.

S205: The network device sends information about the first supplementary uplink carrier to the terminal device.

The information about the first supplementary uplink carrier is used by the terminal device to configure the supplementary uplink carrier to perform uplink transmission. For example, the network device may configure the first SUL carrier by using an RRC reconfiguration message, and the terminal device receives the information about the first supplementary uplink carrier, and configures the first SUL carrier, so that the terminal device can perform uplink transmission on the first SUL carrier. Optionally, when the first SUL carrier changes, the network device updates the information about the first SUL carrier. In addition, the network device may reconfigure the first SUL carrier by using the RRC reconfiguration message.

In Example 2, the network device may configure the plurality of SUL carriers, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Further, the network device may obtain the capability information of the terminal device, to determine an SUL capability of the terminal device. When the terminal device supports the SUL capability, an intersection set of the SUL set supported by the terminal device and the SUL capability supported by the network device is obtained, to select an optimal SUL carrier and configure the optimal SUL carrier, thereby further improving uplink throughput.

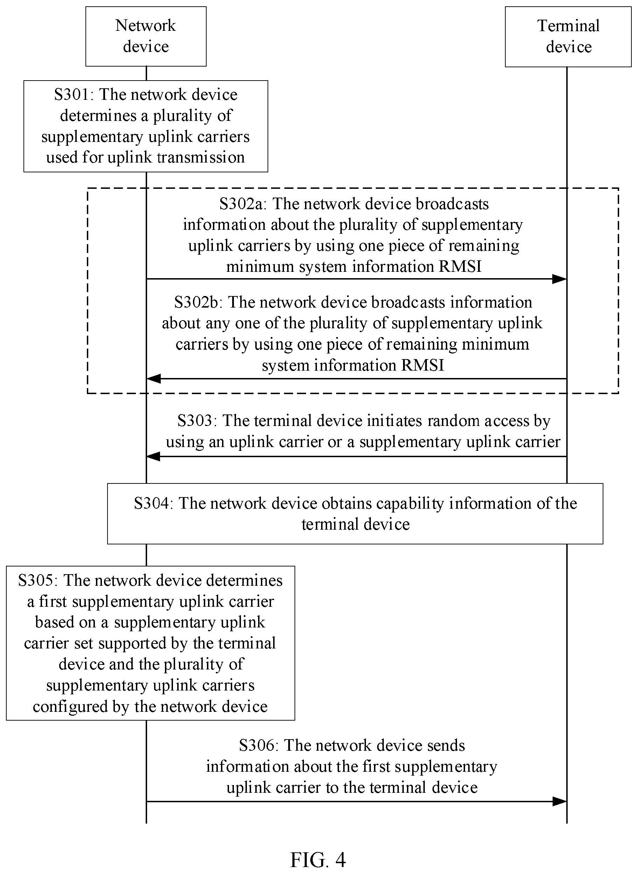

Example 3: FIG. 4 is a schematic flowchart of still another network configuration method according to this application. The network configuration method is applied to the communication system shown in FIG. 1. For example, the network configuration method may be implemented through interaction between the network device and the terminal device, and includes the following steps.

S301: The network device determines a plurality of supplementary uplink carriers used for uplink transmission.

S302a: The network device broadcasts information about the plurality of supplementary uplink carriers by using one piece of remaining minimum system information RMSI.

S302b: The network device broadcasts information about any one of the plurality of supplementary uplink carriers by using one piece of remaining minimum system information RMSI.

In Example 3, the network device broadcasts information about one or more SUL carriers by using one SSB or one piece of RMSI. In other words, the network device broadcasts the information about the one or more SUL carriers in the configuration manner 2 and the processing manner 2 or the processing manner 3 described in S101. For a specific implementation, refer to corresponding descriptions in S101. Details are not described herein again.

Optionally, any SUL carrier broadcast by the network device by using the one SSB or one piece of RMSI in S302b may be a first SUL carrier. In other words, the network device may directly broadcast an optimal SUL carrier.

It should be noted that S302a and S302b are different implementations of a same step. In other words, when S302a is performed, S302b is not performed; and when S302b is performed, S302a is not performed, and either of the two may be performed.

S303: The terminal device initiates random access by using an uplink carrier or a supplementary uplink carrier.

For example, when the network device broadcasts one or more SUL carriers by using one SSB or one piece of RMSI, the terminal device may choose to initiate random access on an NUL carrier, or choose to initiate random access on one broadcast SUL carrier, or choose to initiate random access on any one of the plurality of broadcast SUL carriers. For a specific implementation, refer to corresponding descriptions in an existing protocol standard. Details are not described herein again.

S304: The network device obtains capability information of the terminal device, where the capability information includes a supplementary uplink carrier set supported by the terminal device.

For a specific implementation of S304, refer to corresponding descriptions in S203. Details are not described herein again.

S305: The network device determines a first supplementary uplink carrier based on the supplementary uplink carrier set supported by the terminal device and the plurality of supplementary uplink carriers configured by the network device.

For a specific implementation of S305, refer to corresponding descriptions in S204. Details are not described herein again.

Optionally, the first SUL carrier determined in Example 3 is not necessarily the SUL carrier broadcast in S302a or S302b. In other words, the first SUL carrier is specifically determined by selecting an optimal SUL carrier from the SUL carrier candidate set based on parameters such as coverage of the SUL carrier, load of the SUL carrier, available bandwidth of the SUL carrier, spectral efficiency of the SUL carrier, and throughput of the SUL carrier. The optimal SUL carrier is not necessarily the same as the SUL carrier that is broadcast.

S306: The network device sends information about the first supplementary uplink carrier to the terminal device.

For a specific implementation of S306, refer to corresponding descriptions in S205. Details are not described herein again.

In Example 3, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput. Further, the network device may obtain the capability information of the terminal device, to determine the SUL capability of the terminal device. When the terminal device supports the SUL capability, the intersection set of the SUL set supported by the terminal device and the SUL capability supported by the network device is obtained, to select the optimal SUL carrier and configure the optimal SUL carrier, thereby further improving uplink throughput.

To implement the functions in the method provided in this application, an apparatus or a device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Module division in this application is an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

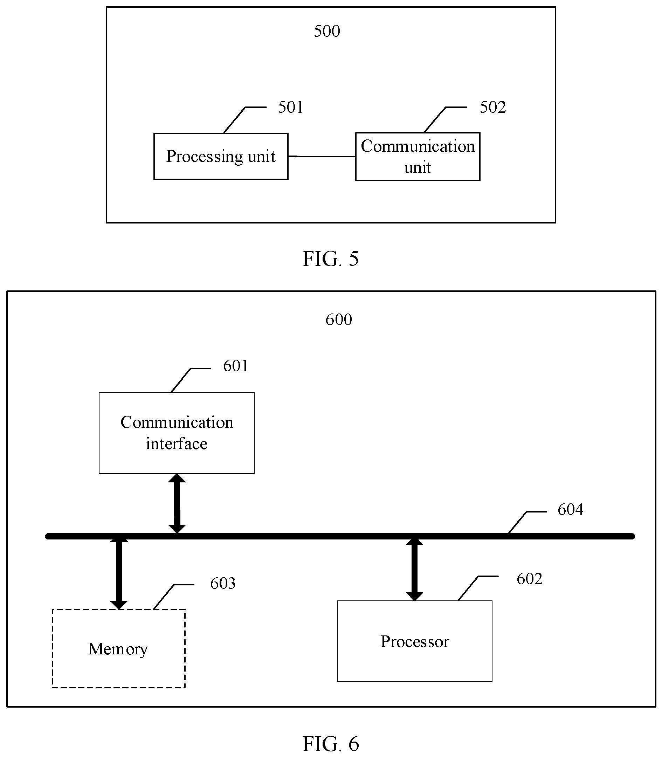

FIG. 5 is a diagram of an apparatus according to this application. The apparatus may include modules that perform, in a one-to-one correspondence, the method/operations/steps/actions described in any embodiment shown in FIG. 2 to FIG. 4. The modules may be implemented by a hardware circuit, software, or a combination of a hardware circuit and software.

The apparatus 500 includes a processing unit 501 and a communication unit 502, configured to implement the method performed by each device in the foregoing embodiments. For example, the apparatus may be referred to as a communication apparatus.

In a possible implementation, the apparatus is a network device, or is located in a network device. Specifically, the processing unit 501 is configured to determine a configuration manner of a plurality of supplementary uplink carriers used for uplink transmission. The processing unit 501 is further configured to process the plurality of supplementary uplink carriers in the configuration manner. That the processing unit 501 processes the plurality of supplementary uplink carriers in the configuration manner includes: skipping broadcasting information about the plurality of supplementary uplink carriers; or broadcasting information about the plurality of supplementary uplink carriers through the communication unit by using one piece of remaining minimum system information RMSI; or broadcasting information about any one of the plurality of supplementary uplink carriers through the communication unit by using one piece of remaining minimum system information RMSI.

Optionally, the information about the plurality of supplementary uplink carriers is carried in a supplementary uplink carrier configuration information element. The configuration manner includes: the supplementary uplink carrier configuration information element is not broadcast in remaining minimum system information; or the supplementary uplink carrier configuration information element is not configured; or each of the plurality of supplementary uplink carriers is not configured with one or more of a corresponding physical uplink shared channel PUSCH, physical uplink control channel PUCCH, physical random access channel PRACH, and sounding reference signal SRS.

Optionally, the configuration manner includes: one supplementary uplink carrier configuration information element carries information about a plurality of supplementary uplink carriers.

Optionally, the processing unit 501 is further configured to obtain capability information of a terminal device through the communication unit 502, where the capability information includes a supplementary uplink carrier set supported by the terminal device. The processing unit 501 is further configured to determine a first supplementary uplink carrier based on the supplementary uplink carrier set supported by the terminal device and the plurality of supplementary uplink carriers. The communication unit 502 is further configured to send information about the first supplementary uplink carrier to the terminal device, where the information about the first supplementary uplink carrier is used by the terminal device to configure a supplementary uplink carrier to perform uplink transmission.

Optionally, that the processing unit 501 is further configured to determine the first supplementary uplink carrier based on the supplementary uplink carrier set supported by the terminal device and the plurality of supplementary uplink carriers includes:
determining an intersection set of the supplementary uplink carrier set supported by the terminal device and the plurality of supplementary uplink carriers; and
determining that the first supplementary uplink carrier is a supplementary uplink carrier that meets a first condition in the intersection set.

The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

Optionally, any broadcast supplementary uplink carrier is the same as the first supplementary uplink carrier.

For specific execution procedures of the processing unit 501 and the communication unit 502 in this implementation, refer to the descriptions in the foregoing method embodiments. Details are not described herein again. According to the network configuration method implemented by the apparatus, the plurality of SUL carriers may be configured, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Alternatively, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput.

In another possible implementation, the apparatus is a terminal device, or is located in a terminal device. Specifically, the communication unit 502 is configured to receive information that is about a plurality of supplementary uplink carriers and that is broadcast by a network device by using one piece of remaining minimum system information RMSI; or the communication unit 502 is configured to receive information that is about any one of a plurality of supplementary uplink carriers and that is broadcast by a network device by using one piece of remaining minimum system information RMSI. The processing unit 501 is configured to initiate random access on a broadcast supplementary uplink carrier.

Optionally, the communication unit 502 is further configured to send capability information of the terminal device to the network device, where the capability information includes a supplementary uplink carrier set supported by the terminal device. The communication unit 502 is further configured to receive information about a first supplementary uplink carrier from the network device. The processing unit 501 is further configured to configure a supplementary uplink carrier based on the information about the first supplementary uplink carrier, where the supplementary uplink carrier is used by the terminal device to perform uplink transmission.

Optionally, the first supplementary uplink carrier is a supplementary uplink carrier that meets a first condition in an intersection set of the supplementary uplink carrier set supported by the terminal device and the plurality of broadcast supplementary uplink carriers. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

Optionally, any broadcast supplementary uplink carrier is the same as the first supplementary uplink carrier.

For specific execution procedures of the processing unit 501 and the communication unit 502 in this implementation, refer to the descriptions in the foregoing method embodiments. Details are not described herein again. According to the network configuration method implemented by the apparatus, information that is about one or more SUL carriers and that is broadcast by the network device on one SSB or one piece of RMSI may be received, so that random access can be initiated on the broadcast SUL carrier, thereby increasing an SUL carrier capacity to improve uplink/downlink throughput.

In another possible implementation, the apparatus is a network device, or is located in a network device. Specifically, the processing unit 501 obtains capability information of a terminal device through the communication unit 502, where the capability information includes a supplementary uplink carrier set supported by the terminal device. The processing unit 501 is further configured to determine a first supplementary uplink carrier based on the supplementary uplink carrier set supported by the terminal device and a plurality of supplementary uplink carriers supported by the network device. The communication unit 502 is further configured to send information about the first supplementary uplink carrier to the terminal device, where the first supplementary uplink carrier is used by the terminal device to configure a supplementary uplink carrier to perform uplink data transmission.

Optionally, that the processing unit 501 obtains the capability information of the terminal device through the communication unit 502 includes:
receiving, from the terminal device, the supplementary uplink carrier set supported by the terminal device, or obtaining, by using a terminal device capability query information element, the supplementary uplink carrier set supported by the terminal device.

Optionally, that the processing unit 501 is further configured to determine the first supplementary uplink carrier based on the supplementary uplink carrier set supported by the terminal device and the plurality of supplementary uplink carriers supported by the network device includes:
determining an intersection set of the supplementary uplink carrier set supported by the terminal device and the plurality of supplementary uplink carriers supported by the network device; and
determining that the first supplementary uplink carrier is a supplementary uplink carrier that meets a first condition in the intersection set. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

Optionally, the processing unit 501 is further configured to: determine a configuration manner of the plurality of supplementary uplink carriers used for uplink transmission, and process the plurality of supplementary uplink carriers in the configuration manner. That the network device processes the plurality of supplementary uplink carriers in the configuration manner includes: skipping broadcasting information about the plurality of supplementary uplink carriers; or broadcasting information about the plurality of supplementary uplink carriers by using one piece of remaining minimum system information RMSI; or broadcasting information about any one of the plurality of supplementary uplink carriers by using one piece of remaining minimum system information RMSI.

Optionally, the information about the plurality of supplementary uplink carriers is carried in a supplementary uplink carrier configuration information element. The configuration manner includes: the supplementary uplink carrier configuration information element is not broadcast in remaining minimum system information; or the supplementary uplink carrier configuration information element is not configured; or each of the plurality of supplementary uplink carriers is not configured with one or more of a corresponding physical uplink shared channel PUSCH, physical uplink control channel PUCCH, physical random access channel PRACH, and sounding reference signal SRS.

Optionally, the configuration manner includes: one supplementary uplink carrier configuration information element carries information about a plurality of supplementary uplink carriers.

Optionally, any broadcast supplementary uplink carrier is the same as the first supplementary uplink carrier.

For specific execution procedures of the processing unit 501 and the communication unit 502 in this implementation, refer to the descriptions in the foregoing method embodiments. Details are not described herein again. According to the network configuration method implemented by the apparatus, the capability information of the terminal device may be obtained, to determine an SUL capability of the terminal device. When the terminal device supports the SUL capability, the intersection set of the SUL set supported by the terminal device and the SUL capability supported by the network device is obtained, to select an optimal SUL carrier and configure the optimal SUL carrier, thereby improving uplink throughput.

In another possible implementation, the apparatus is a terminal device, or is located in a terminal device. Specifically, the communication unit 502 is configured to send capability information of the terminal device to a network device, where the capability information includes a supplementary uplink carrier set supported by the terminal device. The communication unit 502 is further configured to receive information about a first supplementary uplink carrier from the network device. The processing unit 501 is configured to configure a supplementary uplink carrier based on information about the first supplementary uplink carrier, where the supplementary uplink carrier is used by the terminal device to perform uplink data transmission.

Optionally, the first supplementary uplink carrier is a supplementary uplink carrier that meets a first condition in an intersection set of the supplementary uplink carrier set supported by the terminal device and a plurality of supplementary uplink carriers supported by the network device. The first condition includes one or more of the following: a supplementary uplink carrier with strongest coverage in a location area in which the terminal device is located; a supplementary uplink carrier with a lowest load; a supplementary uplink carrier with a largest available bandwidth; and a supplementary uplink carrier with highest spectral efficiency.

Optionally, the communication unit 502 is further configured to receive information that is about the plurality of supplementary uplink carriers and that is broadcast by the network device by using one piece of remaining minimum system information RMSI; or receive information that is about any one of the plurality of supplementary uplink carriers and that is broadcast by the network device by using one piece of remaining minimum system information RMSI. The processing unit 501 is further configured to initiate random access on a broadcast supplementary uplink carrier.

Optionally, any broadcast supplementary uplink carrier is the same as the first supplementary uplink carrier.

For specific execution procedures of the processing unit 501 and the communication unit 502 in this implementation, refer to the descriptions in the foregoing method embodiments. Details are not described herein again. According to the network configuration method implemented by the apparatus, the capability information of the terminal device may be sent to the network device, so that the network device determines an SUL capability of the terminal device. In this way, the terminal device can configure an optimal SUL carrier, thereby improving uplink throughput.

FIG. 6 is a diagram of a device according to this application. The device is configured to implement the network configuration method in the foregoing method embodiments. The device 600 may be a chip system, or may be the device described in the foregoing method embodiments.

The device 600 includes a communication interface 601 and a processor 602. The communication interface 601 may be, for example, a transceiver, an interface, a bus, a circuit, or an apparatus that can implement a transceiver function. The communication interface 601 is configured to communicate with another device through a transmission medium, so that the device 600 can communicate with the another device. The processor 602 is configured to perform a processing-related operation.

In a possible implementation, the device 600 may be a network device, or may be located in a network device. Specifically, the processor 602 is configured to determine a configuration manner of a plurality of supplementary uplink carriers used for uplink transmission. The processor 602 is further configured to process the plurality of supplementary uplink carriers in the configuration manner. That the processor 602 processes the plurality of supplementary uplink carriers in the configuration manner includes: skipping broadcasting information about the plurality of supplementary uplink carriers; or broadcasting information about the plurality of supplementary uplink carriers through the communication unit by using one piece of remaining minimum system information RMSI; or broadcasting information about any one of the plurality of supplementary uplink carriers through the communication unit by using one piece of remaining minimum system information RMSI.

For specific execution procedures of the communication interface 601 and the processor 602 in this implementation, refer to the method performed by the communication unit and the processing unit in the embodiment in FIG. 5 and the descriptions in the foregoing method embodiments. Details are not described herein again. According to the network configuration method implemented by the device, the plurality of SUL carriers may be configured, so that an SUL carrier capacity can be increased when NUL carrier performance is almost not affected. In addition, when the network device configures the plurality of SUL carriers, the network device may not broadcast the information about the plurality of SUL carriers, so that system overheads are not increased, thereby improving uplink/downlink throughput. Alternatively, when the network device configures the plurality of SUL carriers, the network device may broadcast information about one or more SUL carriers by using only one SSB or one piece of RMSI, which is different from a current manner in which the information about the plurality of SUL carriers is broadcast by using a plurality of SSBs or a plurality of pieces of RMSI in that system overheads can be greatly reduced, thereby improving uplink/downlink throughput.

In another possible implementation, the device 600 may be a terminal device, or may be located in a terminal device. Specifically, the communication interface 601 is configured to receive information that is about a plurality of supplementary uplink carriers and that is broadcast by a network device by using one piece of remaining minimum system information RMSI; or the communication interface 601 is configured to receive information that is about any one of a plurality of supplementary uplink carriers and that is broadcast by a network device by using one piece of remaining minimum system information RMSI. The processor 602 is configured to initiate random access on a broadcast supplementary uplink carrier.

For specific execution procedures of the communication interface 601 and the processor 602 in this implementation, refer to the method performed by the communication unit and the processing unit in the embodiment in FIG. 5 and the descriptions in the foregoing method embodiments. Details are not described herein again. According to the network configuration method implemented by the device, information that is about one or more SUL carriers and that is broadcast by the network device on one SSB or one piece of RMSI may be received, so that random access can be initiated on the broadcast SUL carrier, thereby increasing an SUL carrier capacity to improve uplink/downlink throughput.

In another possible implementation, the device 600 may be a network device, or may be located in a network device. Specifically, the processor 602 obtains capability information of a terminal device by using the communication interface 601, where the capability information includes a supplementary uplink carrier set supported by the terminal device. The processor 602 is further configured to determine a first supplementary uplink carrier based on the supplementary uplink carrier set supported by the terminal device and a plurality of supplementary uplink carriers supported by the network device. The communication interface 601 is further configured to send information about the first supplementary uplink carrier to the terminal device, where the first supplementary uplink carrier is used by the terminal device to configure a supplementary uplink carrier to perform uplink data transmission.

For specific execution procedures of the communication interface 601 and the processor 602 in this implementation, refer to the method performed by the communication unit and the processing unit in the embodiment in FIG. 5 and the descriptions in the foregoing method embodiments. Details are not described herein again. According to the network configuration method implemented by the device, the capability information of the terminal device may be obtained, to determine an SUL capability of the terminal device. When the terminal device supports the SUL capability, an intersection set of the SUL set supported by the terminal device and the SUL capability supported by the network device is obtained, to select an optimal SUL carrier and configure the optimal SUL carrier, thereby improving uplink throughput.

In another possible implementation, the device 600 may be a terminal device, or may be located in a terminal device. Specifically, the communication interface 601 is configured to send capability information of the terminal device to a network device, where the capability information includes a supplementary uplink carrier set supported by the terminal device. The communication interface 601 is further configured to receive information about a first supplementary uplink carrier from the network device. The processor 602 is configured to configure a supplementary uplink carrier based on information about the first supplementary uplink carrier, where the supplementary uplink carrier is used by the terminal device to perform uplink data transmission.

For specific execution procedures of the communication interface 601 and the processor 602 in this implementation, refer to the method performed by the communication unit and the processing unit in the embodiment in FIG. 5 and the descriptions in the foregoing method embodiments. Details are not described herein again. According to the network configuration method implemented by the device, the capability information of the terminal device may be sent to the network device, so that the network device determines an SUL capability of the terminal device. In this way, the terminal device can configure an optimal SUL carrier, thereby improving uplink throughput.

Optionally, the device 600 may further include at least one memory 603, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor and the memory may cooperate with each other. The processor may execute the program instructions stored in the memory. The at least one memory and the processor are integrated together.

In this application, a specific connection medium between the communication interface, the processor, and the memory is not limited. For example, the memory, the processor, and the communication interface are connected through the bus. The bus 604 is indicated by a thick line in FIG. 6. A manner of a connection between other components is merely an example for description, and is not limited thereto. The bus may be classified into an address bus, a data bus, a control bus, and the like. For ease of representation, only one thick line is used to represent the bus in FIG. 6, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the method disclosed with reference to this application may be directly performed by a hardware processor, or may be performed by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application provides another device. The device includes a processor. The processor is coupled to a memory. The processor is configured to read and execute computer instructions stored in the memory, to implement the network configuration method in any embodiment shown in FIG. 2 to FIG. 4.

This application provides a communication system. The communication system includes the network device and the terminal device in any embodiment shown in FIG. 2 to FIG. 4.

This application provides a computer-readable storage medium. The computer-readable storage medium stores a program or instructions. When the program or the instructions are run on the computer, the computer is enabled to perform the network configuration method in any embodiment shown in FIG. 2 to FIG. 4.

This application provides a computer program product. The computer program product includes instructions. When the instructions are run on a computer, the computer is enabled to perform the network configuration method in any embodiment shown in FIG. 2 to FIG. 4.

This application provides a chip or a chip system. The chip or the chip system includes at least one processor and an interface, the interface is interconnected to the at least one processor through a line, and the at least one processor is configured to run a computer program or instructions, to perform the network configuration method in any embodiment shown in FIG. 2 to FIG. 4.

The interface in the chip may be an input/output interface, a pin, a circuit, or the like.

The chip system may be a system on chip (system on chip, SoC), may be a baseband chip, or the like. The baseband chip may include a processor, a channel encoder, a digital signal processor, a modem, an interface module, and the like.

In an implementation, the chip or the chip system described in this application further includes at least one memory, and the at least one memory stores instructions. The memory may be a storage unit, for example, a register or a cache, inside the chip, or may be a storage unit (for example, a read-only memory or a random access memory) of the chip.

All or some of the technical solutions provided in this application may be implemented by using software, hardware, firmware, or any combination thereof. When the software is used to implement embodiments, all or a part of embodiments may be implemented in a form of the computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A network configuration method, comprising:
determining a configuration manner of a plurality of supplementary uplink carriers used for uplink transmission; and
processing the plurality of supplementary uplink carriers in the configuration manner, wherein
processing the plurality of supplementary uplink carriers in the configuration manner comprises:
skipping broadcasting information about the plurality of supplementary uplink carriers; or
broadcasting information about the plurality of supplementary uplink carriers by using one piece of remaining minimum system information RMSI; or
broadcasting information about any one of the plurality of supplementary uplink carriers by using one piece of remaining minimum system information RMSI.

2. The method according to claim 1, wherein the information about the plurality of supplementary uplink carriers is carried in a supplementary uplink carrier configuration information element; and
the configuration manner comprises:
the supplementary uplink carrier configuration information element is not broadcast in remaining minimum system information; or
the supplementary uplink carrier configuration information element is not configured; or
each of the plurality of supplementary uplink carriers is not configured with one or more of a corresponding physical uplink shared channel PUSCH, physical uplink control channel PUCCH, physical random access channel PRACH, and sounding reference signal SRS.

3. The method according to claim 1, wherein the configuration manner comprises:
one supplementary uplink carrier configuration information element carries information about a plurality of supplementary uplink carriers.

4. The method according to any one of claims 1 to 3, wherein the method further comprises:
obtaining capability information of a terminal device, wherein the capability information comprises a supplementary uplink carrier set supported by the terminal device;
determining a first supplementary uplink carrier based on the supplementary uplink carrier set supported by the terminal device and the plurality of supplementary uplink carriers; and
sending information about the first supplementary uplink carrier to the terminal device, wherein the information about the first supplementary uplink carrier is used by the terminal device to configure a supplementary uplink carrier to perform uplink transmission.

5. The method according to claim 4, wherein determining the first supplementary uplink carrier based on the supplementary uplink carrier set supported by the terminal device and the plurality of supplementary uplink carriers comprises:
determining an intersection set of the supplementary uplink carrier set supported by the terminal device and the plurality of supplementary uplink carriers; and
determining that the first supplementary uplink carrier is a supplementary uplink carrier that meets a first condition in the intersection set, wherein
the first condition comprises one or more of the following:
a supplementary uplink carrier with strongest coverage in a location area in which the terminal device is located;
a supplementary uplink carrier with a lowest load;
a supplementary uplink carrier with a largest available bandwidth; and
a supplementary uplink carrier with highest spectral efficiency.

6. The method according to claim 5, wherein any broadcast supplementary uplink carrier is the same as the first supplementary uplink carrier.

7. A network configuration method, comprising:
receiving information that is about a plurality of supplementary uplink carriers and that is broadcast by a network device by using one piece of remaining minimum system information RMSI; or
receiving information that is about any one of a plurality of supplementary uplink carriers and that is broadcast by a network device by using one piece of remaining minimum system information RMSI; and
initiating random access on a broadcast supplementary uplink carrier.

8. The method according to claim 7, wherein the method further comprises:
sending capability information of a terminal device to the network device, wherein the capability information comprises a supplementary uplink carrier set supported by the terminal device;
receiving information about a first supplementary uplink carrier from the network device; and
configuring a supplementary uplink carrier based on the information about the first supplementary uplink carrier, wherein the supplementary uplink carrier is used by the terminal device to perform uplink transmission.

9. The method according to claim 8, wherein the first supplementary uplink carrier is a supplementary uplink carrier that meets a first condition in an intersection set of the supplementary uplink carrier set supported by the terminal device and the plurality of broadcast supplementary uplink carriers, wherein
the first condition comprises one or more of the following:
a supplementary uplink carrier with strongest coverage in a location area in which the terminal device is located;
a supplementary uplink carrier with a lowest load;
a supplementary uplink carrier with a largest available bandwidth; and
a supplementary uplink carrier with highest spectral efficiency.

10. The method according to claim 8 or 9, wherein any broadcast supplementary uplink carrier is the same as the first supplementary uplink carrier.

11. A communication apparatus, comprising a processing unit and a communication unit, wherein
the processing unit is configured to determine a configuration manner of a plurality of supplementary uplink carriers used for uplink transmission; and
the processing unit is further configured to process the plurality of supplementary uplink carriers in the configuration manner, wherein
that the processing unit processes the plurality of supplementary uplink carriers in the configuration manner comprises:
skipping broadcasting information about the plurality of supplementary uplink carriers; or
broadcasting information about the plurality of supplementary uplink carriers through the communication unit by using one piece of remaining minimum system information RMSI; or
broadcasting information about any one of the plurality of supplementary uplink carriers through the communication unit by using one piece of remaining minimum system information RMSI.

12. The apparatus according to claim 11, wherein the information about the plurality of supplementary uplink carriers is carried in a supplementary uplink carrier configuration information element; and
the configuration manner comprises:
the supplementary uplink carrier configuration information element is not broadcast in remaining minimum system information; or
the supplementary uplink carrier configuration information element is not configured; or
each of the plurality of supplementary uplink carriers is not configured with one or more of a corresponding physical uplink shared channel PUSCH, physical uplink control channel PUCCH, physical random access channel PRACH, and sounding reference signal SRS.

13. The apparatus according to claim 11, wherein the configuration manner comprises:
one supplementary uplink carrier configuration information element carries information about a plurality of supplementary uplink carriers.

14. The apparatus according to any one of claims 11 to 13, wherein
the processing unit is further configured to obtain capability information of a terminal device through the communication unit, wherein the capability information comprises a supplementary uplink carrier set supported by the terminal device;
the processing unit is further configured to determine a first supplementary uplink carrier based on the supplementary uplink carrier set supported by the terminal device and the plurality of supplementary uplink carriers; and
the communication unit is further configured to send information about the first supplementary uplink carrier to the terminal device, wherein the information about the first supplementary uplink carrier is used by the terminal device to configure a supplementary uplink carrier to perform uplink transmission.

15. The apparatus according to claim 14, wherein that the processing unit is further configured to determine the first supplementary uplink carrier based on the supplementary uplink carrier set supported by the terminal device and the plurality of supplementary uplink carriers comprises:
determining an intersection set of the supplementary uplink carrier set supported by the terminal device and the plurality of supplementary uplink carriers; and
determining that the first supplementary uplink carrier is a supplementary uplink carrier that meets a first condition in the intersection set, wherein
the first condition comprises one or more of the following:
a supplementary uplink carrier with strongest coverage in a location area in which the terminal device is located;
a supplementary uplink carrier with a lowest load;
a supplementary uplink carrier with a largest available bandwidth; and
a supplementary uplink carrier with highest spectral efficiency.

16. The apparatus according to claim 15, wherein any broadcast supplementary uplink carrier is the same as the first supplementary uplink carrier.

17. A communication apparatus, comprising a communication unit and a processing unit, wherein
the communication unit is configured to receive information that is about a plurality of supplementary uplink carriers and that is broadcast by a network device by using one piece of remaining minimum system information RMSI; or
the communication unit is configured to receive information that is about any one of a plurality of supplementary uplink carriers and that is broadcast by a network device by using one piece of remaining minimum system information RMSI; and
the processing unit is configured to initiate random access on a broadcast supplementary uplink carrier.

18. The apparatus according to claim 17, wherein
the communication unit is further configured to send capability information of a terminal device to the network device, wherein the capability information comprises a supplementary uplink carrier set supported by the terminal device;
the communication unit is further configured to receive information about a first supplementary uplink carrier from the network device; and
the processing unit is further configured to configure a supplementary uplink carrier based on the information about the first supplementary uplink carrier, wherein the supplementary uplink carrier is used by the terminal device to perform uplink transmission.

19. The apparatus according to claim 18, wherein the first supplementary uplink carrier is a supplementary uplink carrier that meets a first condition in an intersection set of the supplementary uplink carrier set supported by the terminal device and the plurality of broadcast supplementary uplink carriers, wherein
the first condition comprises one or more of the following:
a supplementary uplink carrier with strongest coverage in a location area in which the terminal device is located;
a supplementary uplink carrier with a lowest load;
a supplementary uplink carrier with a largest available bandwidth; and
a supplementary uplink carrier with highest spectral efficiency.

20. The apparatus according to claim 18 or 19, wherein any broadcast supplementary uplink carrier is the same as the first supplementary uplink carrier.

21. A network device, comprising a processor and a memory, wherein the memory is configured to store instructions, and when the instructions are executed by the processor, the network device is enabled to perform the method according to any one of claims 1 to 6.

22. A terminal device, comprising a processor and a memory, wherein the memory is configured to store instructions, and when the instructions are executed by the processor, the terminal device is enabled to perform the method according to any one of claims 7 to 10.

23. A communication system, comprising a network device and a terminal device, wherein the network device performs the method according to any one of claims 1 to 6, and the terminal device performs the method according to any one of claims 7 to 10.

24. A computer-readable storage medium, wherein the computer-readable storage medium stores instructions, and when the instructions are run on a computer, the computer is enabled to perform the method according to any one of claims 1 to 10.

25. A chip system, wherein the chip system comprises a processor, a memory, and an interface, and the processor and the interface are configured to perform the method according to any one of claims 1 to 10.

26. A computer program product, comprising instructions, wherein when the instructions are run on a computer, the computer is enabled to perform the method according to any one of claims 1 to 10.
